(19) Europäisches Patentamt
European Patent Office
Office européen des brevets

(11) Veröffentlichungsnummer: **0 302 289 B1**

(12) **EUROPÄISCHE PATENTSCHRIFT**

(45) Veröffentlichungstag der Patentschrift: **21.11.91**

(51) Int. Cl.5: **C08K 5/20**, C08K 5/16, C08L 67/08, C09D 167/00, C09D 161/24, C09D 7/12

(21) Anmeldenummer: **88111516.6**

(22) Anmeldetag: **18.07.88**

# (54) Verfahren zur Reduzierung der Formaldehydemission bei säurehärtenden Lacken auf Basis von Alkydharz-Harnstoffharz-Kombinationen.

(30) Priorität: **05.08.87 AT 1976/87**

(43) Veröffentlichungstag der Anmeldung: **08.02.89 Patentblatt 89/06**

(45) Bekanntmachung des Hinweises auf die Patenterteilung: **21.11.91 Patentblatt 91/47**

(84) Benannte Vertragsstaaten: **BE CH DE ES FR GB IT LI NL SE**

(56) Entgegenhaltungen:
**EP-A- 0 138 448**
**EP-A- 0 155 194**
**DE-A- 1 282 952**
**US-A- 3 917 558**

(73) Patentinhaber: **VIANOVA KUNSTHARZ AKTIENGESELLSCHAFT**
**Postfach 191 Leechgasse 21**
**A-8011 Graz(AT)**

(72) Erfinder: **Urbano, Edmund, Dr.**
**Grazer Strasse 34**
**A-8045 Graz(AT)**
Erfinder: **Illaszewicz, Andreas, Dr.**
**Koschatgasse 17**
**A-8020 Graz(AT)**
Erfinder: **Ospelt, Elisabeth, Dipl.-Ing.**
**Unterhal 412**
**A-8051 Graz(AT)**

**EP 0 302 289 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

**Beschreibung**

Die vorliegende Erfindung betrifft ein Verfahren zur Verminderung des Gehalts an freiem Formaldehyd und der Formaldehydemission bei säurehärtenden Lacken auf Basis von Alkydharz-Harnstoffharz-Kombinationen.

Säurehärtende Alkydharz-Harnstoffharz-Kombinationen werden in großem Umfang für die Holzlackierung, z. B. für Möbel oder zur Versiegelung von Parkettböden, eingesetzt. Ihre Vorteile liegen in der raschen Trocknung und der guten mechanischen und chemischen Beständigkeit der aufgebrachten Lackfilme.

Ein wesentlicher Nachteil dieser Bindemittelklasse liegt in der Geruchsbelästigung, der der Verarbeiter durch die Formaldehydemission aus dem nassen Lackfilm ausgesetzt ist. Formaldehyd macht sich schon in geringen Konzentrationen (ca. 8 ppm) durch seinen stechenden Geruch bemerkbar und ist überdies stark toxisch (MAK-Wert: 1 ppm = 1,2 mg/m$^3$ Luft).

Aus der Literatur sind zahlreiche Vorschläge bekannt, diesen Mangel zu beheben:
So wurde versucht, in Harnstoffharzen den Gehalt an freiem Formaldehyd durch Zugabe von formaldehydbindenden Substanzen, wie Ammoniak, Aminen bzw. deren Salzen (CS-PS 195 006), Hydrazinderivaten (Jap. Kokai JP 49/106 588), Harnstoff, Thioharnstoff und Ethylenharnstoff (Jap. Kokai JP 49/42 737, AT-PS 367.445, DE-OS 31 43 969), Acrylamidpolymerisaten (US-PS 4,346,181), Ketonen, $\beta$-Diketonen und $\beta$-Ketosäureestern (FR-A-2,575,754, PL-PS 72 885, EP-PS 00 02 596, Jap. Kokai JP 48/85 741), $Na_2B_4O_7$ - (CS-PS 185 020) und Schwefelverbindungen (US-PS 4,264,760) zu verringern.

Diese Maßnahmen bleiben in den meisten Fällen ohne nachhaltigen Erfolg, da damit der Gehalt an freiem Formaldehyd nur vorübergehend gesenkt werden kann und er sich rasch wieder auf den ursprünglichen Wert erhöht. Außerdem zeigt die praktische Erfahrung, daß auch Harze mit sehr niedrigem Gehalt an freiem Formaldehyd während der Verfilmungsreaktion eine starke Formaldehydemission aufweisen.

Der Zusatz von "Formaldehydfängern" ist also nur dann sinnvoll, wenn damit auch eine wesentliche Verringerung der Geruchsbelästigung bei der Aushärtung der Lacke erreicht wird. Außerdem müssen die zugesetzten Substanzen aus wirtschaftlichen Gründen bereits in geringen anteiligen Mengen wirksam sein und darüber hinaus mit den Alkydharz-Harnstoffharz-Kombinationen einwandfrei verträglich sein, um Trübungen oder eine verminderte Lagerfähigkeit der Lacke, sowie Störungen im Lackfilm, wie Kraterbildung oder Glanzverlust, zu vermeiden.

Es wurde nun gefunden, daß die Formaldehydemission bei der Verarbeitung von Alkydharz-Harnstoffharz-Kombinationen wesentlich herabgesetzt werden kann, wenn dem Harnstoffharz C-H-acide Verbindungen zugesetzt werden, die im Molekül eine acide alpha-Methylengruppe und ein in Amidbindung vorliegendes Stickstoffatom enthalten.

Die vorliegende Erfindung betrifft demgemäß ein Verfahren zur Verminderung des Gehalts an freiem Formaldehyd und der Formaldehydemission bei säurehärtenden Lacken auf Basis von Alkydharz-Harnstoffharz-Kombinationen, welches dadurch gekennzeichnet ist, daß man 0,2 bis 10 Gew.-%, bevorzugt 0,3 bis 5,0 Gew.-%, bezogen auf Festsubstanz der Alkydharz-Harnstoffharz-Kombination, einer Verbindung zusetzt, welche im Molekül eine acide alpha-Methylengruppe mit einen pKa-Wert (bei 25 °C in Wasser) von 0,5 bis 14,0 besitzt der allgemeinen Formel

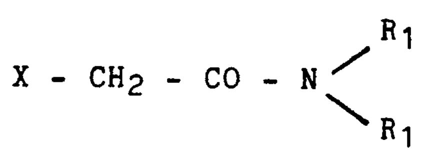 ,

in welcher
X eine Gruppe

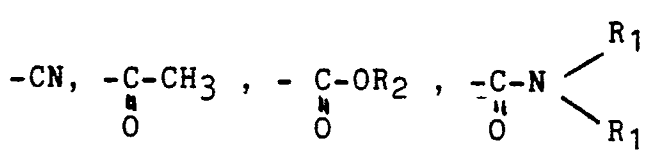 ,

oder $-NO_2$ ist,

$R_1$ ein Wasserstoffatom oder einen Alkylrest mit 1 bis 18 C-Atomen und

$R_2$ einen Alkylrest von 1 bis 18 C-Atomen darstellen.

Die Verbindungen sind als solche, wie auch in Form ihrer C-Methylolverbindungen und gegebenfalls N-Methylolverbindungen, wie sie bei der Reaktion mit dem freien Formaldehyd entstehen, gut in den Harzkombinationen löslich und zeigen innerhalb der beanspruchten Grenzen keine negativen Auswirkungen auf den Lack bzw. auf die daraus hergestellten Lackierungen.

Bevorzugt eingesetzte formaldehydbindende Substanzen sind Cyanacetamid, Acetoacetamid und deren N-Mono- oder Dialkylderivate, wie sie durch Umsetzung der entsprechenden Ester mit primären Aminen, z. B. mit Fettaminen erhalten werden.

Die Zugabe der Verbindungen erfolgt vor / während / nach der Herstellung der säurehärtenden Alkydharz-Harnstoffharz-Kombination, vorteilhaft in Form einer 30 Gew.-%igen Lösung in Ethanol, Ethylenglykol, N-Methylpyrrolidon, Wasser oder einem anderen für das Lacksystem geeigneten Lösungsmittel. Bevorzugt werden die Verbindungen der Harnstoffharz-Komponente zugegeben.

Die Zusammensetzung säurehärtender Lacke auf der Basis von Alkydharz-Harnstoffharz-Kombinationen sowie der Aufbau der Komponenten für solche Kombinationen sind dem Fachmann bekannt.

Im folgenden Beispiel wird eine Alkydharz-Harnstoffharz-Kombination eingesetzt, welche wie folgt definiert wird:

Säurehärtbares, plastifiziertes Harnstoffharz zur Herstellung von Ein- und Zweikomponentenlacken zur industriellen Oberflächenveredelung von Holz und Holzwerkstoffen. Lieferform: 60%ig in Ethanol/Butanol; Viskosität: 220 - 320 s (DIN 53 211/20° C); Säurezahl (Lieferform): unter 8 mg KOH/g (DIN 53 402), bestehend aus 44 Tlen kurzöligem lufttrocknendem Alkydharz mit 82 % Festharz, Ölgehalt : 39 %. Säurezahl 5 - 15 mg KOH/g, (DIN 53 402), Viskosität 150 - 200 s (70%ig in Ethanol, DIN 53 402), 38 Tlen Harnstoffharz mit 62 % Festharz, Säurezahl unter 2 mg KOH/g (DIN 53 402) und einer Viskosität von 60 - 150 s in der Lieferform (Ethanol, DIN 53 211/20° C) und 28 Tlen Butanol.

Geprüft wurde ein Lack auf Basis der obengenannten Harzkombination, welcher wie folgt zusammengesetzt war:

<u>Lack A:</u>

| | |
|---|---|
| a) | 92,- Gew.-Teile Harz (60%ig) = (55,2 Tle Festharz) |
| | 4,- Gew.-Teile Xylol |
| | 2,- Gew.-Teile Ethylglykolacetat |
| | 2,- Gew.-Teile Butylacetat |
| | 100,- |
| b) | 10,- Gew.-Teile p-Toluolsulfonsäure-Lösung (10%ig in Ethanol) |

<u>Lack B:</u> Der Lackkomponente A a wurden 2 Gew.-% Cyanacetamid (bezogen auf Festharz der Alkydharz-Harnstoffharz-Kombination als 30%ige Lösung in Ethanol zugesetzt.

<u>Lack C:</u> Der Lackkomponente A a wurden 2 Gew.-% Acetoacetamid (bezogen auf Festharz der Alkydharz-Harnstoffharz-Kombination) als 30%ige Lösung in Ethanol zugesetzt.

<u>Lack D:</u> Vor der Kombination des Alkydharzes mit dem Harnstoffharz wurden letzterem 2 Gew.-% Cyanacetamid (bezogen auf Festharz der Alkydharz-Harnstoffharz-Kombination) als 30%ige Lösung in Ethanol zugesetzt und nach Zugabe des Alkydharzes wurde der Ansatz bei 60° C während 1 Stunde gut gemischt.

<u>Vergleichslack E:</u> Der Lackkomponente A a wurden 2 Gew.-% Cyclohexandion-1,3 (bezogen auf Festharz der Alkydharz-Harnstoffharz-Kombination) als 30%ige Lösung in Ethanol zugesetzt.

Die Bestimmung des freien Formaldehyds im Lack erfolgte nach der Sulfitmethode gemäß DIN 53 187 und ergab folgende Werte:

| | Lack | | | | |
|---|---|---|---|---|---|
| | A | B | C | D | E |
| Freier Formaldehyd Gew.-% auf Lack | | | | | |
| nach Lagerung 1 Tag<br>nach Lagerung 3 Monate | 1,0<br>1,2 | 0,4<br>0,4 | 0,5<br>0,5 | 0,3<br>0,35 | 0,6<br>0,8 |

Die Formaldehydemission wurde nach folgender Methode bestimmt: Der zu untersuchende Lack wird mittels Aufziehgerät auf eine gewogene Glasplatte mit einer Naßfilmstärke von 300 µm aufgebracht und die Glasplatte sofort in ein geschlossenes Glasgefäß mit den Abmessungen 22 x 12 x 6 cm gebracht, durch welches pro Minute 80 ml Luft strömt, die in einer Vorlage durch eine 0,1%ige Lösung von 2-Hydrazono-2,3-dihydro-3-methylbenzothiazol-hydrochlorid durchgeleitet wird. Die Bestimmung des Formaldehyds erfolgt photometrisch nach Zusatz von 10%iger Eisen(III)chloridlösung. Die Methode wird im "Handbuch der photometrischen Analyse organischer Verbindungen" von B. KAKAC und Z. VEJDELEK, Verlag Chemie, ausführlich beschrieben. Durch mehrere Messungen erhält man ein zeitabhängiges Mengendiagramm. Der Meßzyklus wird nach 24 Stunden beendet. Anschließend wird die Lackmenge durch Rückwägung festgestellt. Diese Menge dient als Bezugspunkt für die Erstellung der Emissionskurve.
(Ergebnisse siehe Tabelle 1)

Tabelle 1

| Zeit | Summe der Formaldehydemission +) | | | | |
|---|---|---|---|---|---|
| Stunden | Lack A | Lack B | Lack C | Lack D | Lack E |
| 0,5 | 0,16 | 0,06 | 0,09 | 0,05 | 0,12 |
| 1,0 | 0,47 | 0,14 | 0,18 | 0,12 | 0,34 |
| 1,5 | 0,64 | 0,21 | 0,25 | 0,18 | 0,48 |
| 2,0 | 0,75 | 0,28 | 0,32 | 0,24 | 0,63 |
| 2,5 | 0,87, | 0,34 | 0,37 | 0,28 | 0,78 |
| 3,0 | 1,00 | 0,39 | 0,45 | 0,32 | 0,95 |
| 5,0 | 1,65 | 0,67 | 0,79 | 0,52 | 1,56 |
| 7,0 | 2,15 | 0,97 | 1,32 | 0,76 | 2,09 |
| 24,0 | 3,00 | 1,53 | 1,74 | 1,29 | 2,92 |

+) mg/g Trockenfilm

Auch die lacktechnischen Eigenschaften werden durch die Zusätze nicht beeinflußt (Ergebnisse siehe Tabelle 2).

Die Lacke wurden nach folgenden Methoden geprüft:

(1) Messung der Trockenzeit am "Drying Recorder" Naßfilmstärke ca. 150 µm, Laufzeit 6 Stunden; a / b / c

a = Verlaufzeit

b = Antrocknung

c = Durchtrocknung

Angaben in Minuten

(2) gemessen nach DIN 53 157 bei 120 und 300 µm Naßfilm Angaben in Minuten

(3) Stunden bei 25 °C bis zur beginnenden Gelierung

Tabelle 2

| Prüfung | Methode | Lack A | Lack B | Lack C | Lack D |
|---|---|---|---|---|---|
| Trocknung | (1) | 8/13/17 | 9/13/27 | 10/15/20 | 8/13/19 |
| Pendelhärte | (2) | | | | |
| nach 3 h | | 26/92 | 23/69 | 22/77 | 29/85 |
| nach 6 h | | 64/137 | 164/109 | 58/120 | 70/135 |
| nach 24 h | | 141/194 | 128/172 | 135/169 | 140/185 |
| Topfzeit | (3) | 51 | 50 | 50 | 60 |

## Patentansprüche

1. Verfahren zur Verminderung des Gehalts an freiem Formaldehyd und der Formaldehydemission bei säurehärtenden Lacken auf Basis von Alkydharz-Harnstoffharz-Kombinationen, dadurch gekennzeichnet, daß man 0,2 bis 10 Gew.-%, bevorzugt 0,3 bis 5,0 Gew.-%, bezogen auf Festsubstanz der Alkydharz-Harnstoffharz-Kombination, einer Verbindung zusetzt, welche im Molekül eine acide alpha-Methylengruppe mit einen pKa-Wert (bei 25° C in Wasser) von 0,5 bis 14,0 besitzt der allgemeinen Formel

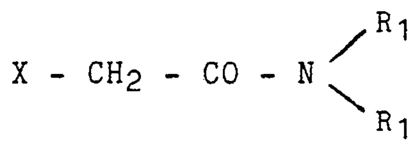

,

in welcher
X eine Gruppe

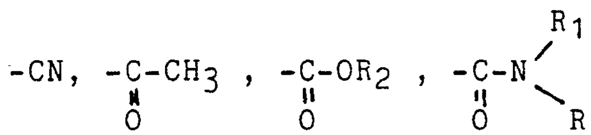

,

oder $-NO_2$ ist,
$R_1$ ein Wasserstoffatom oder einen Alkylrest mit 1 bis 18 C-Atomen
und
$R_2$ einen Alkylrest von 1 bis 18 C-Atomen darstellen.

2. Verfahren nach Anspruch 1, dadurch gekennzeichnet, daß als Verbindung Cyanacetamid, Acetoacetamid oder deren N-Mono-oder-Di-Alkylderivate zugesetzt werden.

3. Verfahren nach den Ansprüchen 1 und 2, dadurch gekennzeichnet, daß die Verbindung als 10 - 50 Gew.-%ige Lösung in Ethanol,Ethylenglykol,N-Methylpyrrolidon, Wasser oder in einem anderen für das Harzsystem geeigneten Lösungsmittel eingesetzt wird.

4. Verfahren nach den Ansprüchen 1 bis 3, dadurch gekennzeichnet, daß die Verbindung der Harnstoffharz-Komponente zugegeben wird.

## Claims

1. Process for reducing the free formaldehyde content and formaldehyde emission of acid-curing paints based on alkyd urea resin combinations, characterised in that 0.2 to 10 % by weight, preferably 0.3 to

5.0 % by weight, relative to the solid substance of the alkyd urea resin combination, of a compound is added which has one acidic alpha-methylene group of a pKa value (at 25 ° C in water) of 0.5 to 14.0 in the molecule, of the formula

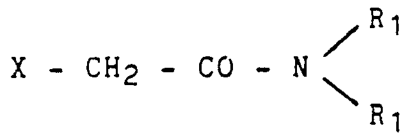

in which
X is a

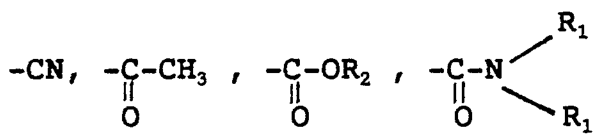

or $-NO_2$ group,
$R_1$ is a hydrogen atom or an alkyl radical having 1 to 18 C atoms
and
$R_2$ is an alkyl radical of 1 to 18 C atoms.

2. Process according to Claim 1, characterised in that the compound added is cyanoacetamide, acetoacetamide or N-mono- or di-alkylderivatives thereof.

3. Process according to Claims 1 and 2, characterised in that the compound is used as a 10 - 50 % strength by weight solution in ethanol, ethylene glycol, N-methylpyrrolidone, water or in another solvent suitable for the resin system.

4. Process according to Claims 1 to 3, characterised in that the compound is added to the urea resin component.

**Revendications**

1. Procédé pour réduire la teneur en formaldéhyde libre et l'émission de formaldéhyde des laques durcissant à l'acide à base de combinaisons résine alkyde-résine d'urée, caractérisé en ce que l'on ajoute 0,2 à 10% en poids, de préférence 0,3 à 5,0% en poids, par rapport à la substance solide de la combinaison résine alkyde-résine d'urée, d'un composé qui possède dans sa molécule un groupe alpha-méthylène acide avec un pKa (à 25 ° C dans l'eau) de 0,5 à 14,0, de formule générale

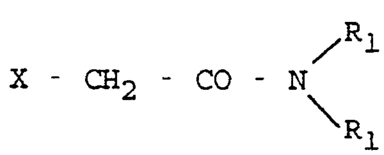

,

dans laquelle
X est un groupe

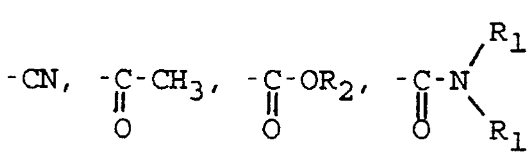

ou $-NO_2$, $R_1$ est un atome d'hydrogène ou un reste alkyle de 1 à 18 atomes de carbone
et
$R_2$ est un reste alkyle de 1 à 18 atomes de carbone.

**2.** Procédé selon la revendication 1, caractérisé en ce que l'on ajoute, comme composé, le cyanacétamide, l'acétoacétamide ou leurs dérivés N-monoalkyle ou N-dialkyle.

**3.** Procédé selon les revendications 1 et 2, caractérisé en ce que le composé est utilisé sous forme d'une solution à 10-50% en poids dans l'éthanol, l'éthylèneglycol, la N-méthylpyrrolidone, l'eau ou un autre solvant convenant au système de résines.

**4.** Procédé selon les revendications 1 à 3, caractérisé en ce que le composé est ajouté au constituant de résine d'urée.